# EUROPÄISCHE PATENTSCHRIFT

(11) **EP 1 150 057 B1**
(45) Veröffentlichungstag und Bekanntmachung des Hinweises auf die Patenterteilung: **26.01.2005**
(21) Anmeldenummer: 01108241.9
(22) Anmeldetag: 31.03.2001
(51) Int. Cl.: F16L 59/02

(54) **Mit Kennzeichnungselementen versehenes Dämmmaterial**
Insulating material comprising identification elements
Materiau d'isolation comportant des moyens d'identification

(30) Priorität: 27.04.2000 DE 10020701
(43) Veröffentlichungstag der Anmeldung: 31.10.2001
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel, Dipl.-Ing.

(56) Entgegenhaltungen:
- EP-A- 0 795 424
- EP-A- 0 867 572
- WO-A-92/13150
- DE-A- 3 713 108
- DE-A- 3 908 128
- DE-A- 19 542 403
- DE-U- 29 603 918
- US-A- 3 941 159

## Beschreibung

Die Erfindung betrifft ein Dämmmaterial, bestehend aus einer Fasermatte, insbesondere aus Mineralfasern, vorzugsweise aus Steinwolle, einem streifenförmig ausgebildeten Kennzeichnungselement, das auf der großen Oberfläche der Fasermatte derart angeordnet ist, dass auf dem Kennzeichnungselement angeordnete Informationen erkennbar sind und einem auf mindestens einer großen Oberfläche der Fasermatte angeordnetem Trägermaterial.

Ein gattungsgemäßes Dämmmaterial aus Mineralwolle besteht aus glasig erstarrten Mineralfasern. Die Zusammensetzung der Mineralfasem ist deutlich unterschiedlich. Mineralfasern mit hohen Anteilen an Alkalien entsprechen der gebräuchlichen Handelsbezeichnung "Glaswolle", wohingegen Mineralfasern, in denen Erdalkalien als Netzwerkswandler dominieren und in denen nicht unerhebliche Anteile an Aluminiumoxid vorhanden sind, üblicherweise als "Steinwolle" bezeichnet werden. Durch die allgemeine Forderung, Mineralfasern mit relativ geringer Biolöslichkeit herzustellen und der zunehmenden Verwendung von Sekundärrohstoffen, nimmt die Polarität in den Eigenschaften zwischen den beiden voranstehend genannten Mineralwollevarietäten ab. Um die sogenannten biolöslichen Mineralfasern von den früher eingesetzten Dämmmaterialien unterscheiden zu können bzw. den Hersteller des Produkts auch während und nach der Nutzung identifizieren zu können, ist es erforderlich, Dämmmaterialien unverwechselbar und dauerhaft zu kennzeichnen.

Derartige Kennzeichnungen der in den Verkehr gebrachten Baustoffe, also auch der Dämmmaterialien, sind nach deutschem und europäischem Recht generell erforderlich. Die Kennzeichnung erfolgt zumeist durch ein auf den Verpackungsstoff oder den Verpackungsbehälter angebrachtes Etikett. Hierbei besteht aber der Nachteil, dass nach dem Entfernen der Verpackung bzw. der Entnahme des Dämmmaterials aus dem Behältnis die Identifizierung nur noch nach dem Aussehen oder mit zunehmenden Einschränkungen nach der chemischen Zusammensetzung möglich ist. Dämmmaterialien aus Mineralwolle, wie insbesondere großformatige Dachdämmplatten werden daher individuell gekennzeichnet. Derartige Kennzeichnungen in Form von Markierungen haben aber in erster Linie den Sinn, die richtige Einbaulage einer der beiden großen Oberflächen anzugeben. Dennoch ist selbstverständlich auch mit einer derartigen Kennzeichnung eine Zuordnung des Dämmmaterials einem bestimmten Hersteller unter Umständen möglich. Erforderlich ist hierzu aber eine umfangreiche Dokumentation über Jahre hinweg, da derartige Kennzeichnungen nicht zwingend mit dem Namen des Herstellers oder mit bestimmten Produktbezeichnungen, die einem bestimmten Hersteller zugeordnet werden können, erfolgen.

Weisen Dämmmaterialien aus Mineralwolle Folien oder Papiere als Kaschierung auf (siehe, zum Beispiel, EP-A-0 867 572), so besteht die Möglichkeit, diese Kaschierungen mit entsprechenden Bezeichnungen zu bedrucken oder auf diese Kaschierungen Etiketten aufzukleben. Beispielsweise werden auf derartige Kaschierungen von Dämmfilzen rasterförmige Markierungen aufgebracht, um das Ablängen zu erleichtern. Alternativ hierzu besteht die Möglichkeit, Markierungen mit Hilfe von aufgespritzten Farben auf den Kaschierungen oder auf den Dämmmaterialien sebst zu applizieren. Aufgrund der hohen Durchlaufgeschwindigkeit der für die Herstellung von Dämmmaterialien aus Mineralwolle erforderlichen Herstellungsanlagen haben diese Techniken aber keine größere Bedeutung erlangt.

Eine weitaus kostengünstigere und damit praktikablere Lösung ist die bekannte Einbrenntechnik. Bei der Einbrenntechnik werden Markierungen oder Bezeichnungen im direkten Kontakt oder mit Hilfe, beispielsweise von Lasern, in das Dämmmaterial aus Mineralwolle in der Gestalt eingebrannt, dass das vorhandene organische Bindemittel verfärbt oder partiell verbrannt wird. Die Deutlichkeit dieser Markierungen und Bezeichnungen ist dabei abhängig, von dem Gehalt des organischen Bindemittels und der Dichte des Dämmmaterials bzw. der Homogenität seiner Oberfläche. Nachteilig ist hierbei die hohe thermische Belastung des Dämmmaterials, die mitunter zu einer vollständigen Verfärbung des Bindemittels führt bzw. das Bindemittel sogar zerstört. Hierdurch nehmen auch die Mineralfasern eine andere Färbung an, so dass die kennzeichnenden Markierungen nicht mehr eindeutig identifizierbar sind.

Für die Wärmedämmung von Öfen, Kraftwerkskesseln, Heißwind-Rohrleitungen, heißgehenden Maschinen oder dergleichen werden Mineralwolle-Dämmmaterialien verwendet, die keine oder für diese Markierungstechnik nur geringe Anteile an verfärbbaren Substanzen aufweisen. Bei diesen Anwendungszwecken scheidet auch eine lokale Anreicherung von verfärbbaren organischen Bindemitteln aufgrund der entstehenden Gase bei der Verbrennung aus. Dies gilt auch, wenn in der Dämmmaterialmasse absolut größere Mengen verbrennbarer Substanzen vorhanden sind, deren Dispersion aber ungleich größer ist, so dass das Brandverhalten hierdurch eine Änderung erfahren kann. Üblicherweise werden derartige Dämmmaterialien aus Mineralfasern als Matten bezeichnet. Diese Matten bestehen aus Mineralfasem, die als Mineralfasermasse auf einem Förderband abgelegt und weiteren Verarbeitungsstationen zugeleitet werden. Diese Mineralfasermasse wird wegen des fehlenden oder geringen inneren Zusammenhalts auf ein Trägermaterial, wie beispielsweise ein Drahtgeflecht, ein Gittergewebe aus Glasfasern, thermisch beständigen Kunststofffasern angeordnet, insbesondere gesteppt. Es sind auch solche Mineralfasermatten bekannt, die als Sonderformen auch beidseitig mit einem Trägermaterial verbunden, insbesondere versteppt sind. Darüber hinaus sind Mineralfasermatten bekannt, bei denen Wärmestrahlung-reflektierende Folien, insbesondere Metall-Folien zwischen Trägermaterial und Dämmmaterial eingelegt sind. In diesen Fällen können dauerhafte Bezeichnungen in die Folien eingeprägt werden.

Die Befestigung der Trägermaterialien an der Mineralfasermatte erfolgt vorzugsweise in Form einer Versteppung in der Gestalt, dass die Mineralfasermatte auf dem Trägermaterial aufliegt. Die Versteppung wird aus Kostengründen überwiegend kontinuierlich durchgeführt, während es früher und auch heute noch in weniger lohnintensiven Ländern üblich war bzw. ist, die Mineralfasermatten diskontinuierlich mit dem Trägermaterial zu versteppen. Die Mineralfasermatten weisen vorzugsweise Dicken von ca. 30 bis 120 mm auf, wobei sie in einem Rohdichtenbereich zwischen ca. 50 und 160 kg/m³ hergestellt sind. Die Längen derartiger Mineralfasermatten liegen zwischen 1,2 und 7 m. Das häufig als Trägermaterial verwendete Drahtgeflecht wird in seiner Maschenweite in Normen und einschlägigen Verbandsvorschriften auf ca. 20 mm begrenzt. Für den Transport und die Lagerung derartiger Mineralfasermatten ist es üblich, diese aufzurollen oder zusammenzufalten und mit Bändern aus Kunststoff oder Stahl zu umreifen. Diese Bänder dienen gleichzeitig als Traggriffe. Am Verarbeitungsort werden die Mineralfasermatten entrollt bzw. entfaltet und gegebenenfalls auf die erforderliche Länge und auf die erforderliche Breite zugeschnitten und am zu dämmenden Objekt befestigt. In der Regel liegt hierbei das Trägermaterial außen, d.h. an der kälteren Seite des Dämmmaterials. Bei größeren Dämmdicken können die Mineralfasermatten auch mehrlagig verlegt werden.

Zur Kennzeichnung ist es ohne weiteres möglich, Metallmarken mit Hilfe von Haken, Klammern oder dergleichen außen an den Trägermaterialien zu befestigen. Diese Vorgehensweise hat sich aber nicht bewährt, da die Marken leicht verloren gehen oder zu Verletzungen der handhabenden Personen führen können. Die Metallmarken können auch in Form von sogenannten Plomben ausgeführt werden, die über Drähte, Garne oder dergleichen mit dem Trägermaterial verbindbar sind. Da die Mineralfasermatten gegebenenfalls in eine Vielzahl von Abschnitten unterteilt werden, besteht bei dieser Vorgehensweise darüber hinaus das Erfordernis, eine große Anzahl von Metallmarken pro Mineralfasermatte vorzusehen, so dass sichergestellt ist, dass bei dem üblicherweise notwendigen Längen von Abschnitten der Mineralfasermatte zumindest eine Marke am Trägermaterial befestigt ist. Um die kostenintensive große Anzahl von Metallmarken zu vermeiden, wäre es sinnvoll, diese Metallmarken in gebündelter Form jeder Mineralfasermatte beizufügen, so dass der Verarbeiter selbst eine Kennzeichnung durch Einschieben oder Befestigen der Metallmarke vornehmen kann. Diese Vorgehensweise setzt aber voraus, dass der Verarbeiter entsprechend verantwortungsbewußt seine Arbeit durchführt, was in der Regel nicht unterstellt werden kann.

Um diese Probleme in der Praxis auszuschließen hat es sich als sinnvoll erwiesen, einen Kennzeichnungsstreifen zwischen dem Dämmmaterial und dem Trägermaterial anzuordnen. Beispieslweise ist eine derartige Vorgehensweise aus der DE 296 03 918 U1 bekannt, bei der zwischen der Mineralfasermatte und einem Drahtgeflecht ein durch Perforierung oder Einprägung beschrifteter Kennzeichnungsstreifen eingelegt ist. Der Kennzeichnungsstreifen soll mindestens bis zu der Anwendungstemperatur der Fasermatte beständig sein. Weiterhin ist vorgesehen, dass der Kennzeichnungsstreifen parallel zu der Längsachse, aber auch quer dazu eingelegt wird. Der Streifen besteht dem Wortsinn nach aus flächigen Gebilden, bei denen die Länge das mehrfache, zumindest das dreifache der Breite der Mineralfasermatte ausmacht. Nachteilig bei dieser vorbekannten Ausgestaltung ist aber, dass das verhältnismäßig engmaschige Drahtgeflecht die Kennzeichnung weitgehend abdeckt. Zudem kann der Kennzeichnungsstreifen verrutschen, wenn die durch das Aufrollen oder Auffalten vorhandene Spannung der Mineralfasermatte beim Ablängen oder beim Einbau verringert wird. Es besteht hierbei sogar die Gefahr, dass der Kennzeichnungsstreifen bei der Montage herausfällt.

Ausgehend von diesem Stand der Technik liegt der Erfindung die Aufgabe zugrunde, ein gattungsgemäßes Dämmmaterial derart weiterzubilden, dass die voranstehend beim Stand der Technik erkennbaren Nachteile vermieden werden, insbesondere die Anordnung des Kennzeichnungselementes derart vorgesehen ist, dass die darauf angegebene Kennzeichnung in jeder Lage gut erkennbar ist und der Kennzeichnungsstreifen sicher mit dem Dämmmaterial verbunden ist.

Die **Lösung** dieser Aufgabenstellung sieht vor, dass das Kennzeichnungselement zumindest in Teilbereichen unterhalb und in anderen Teilbereichen oberhalb des Trägermaterials angeordnet und zumindest mit dem Trägermaterial verbunden ist.

Bei der erfindungsgemäßen Ausgestaltung des Dämmmaterials besteht somit eine wesentlich verbesserte Fixierung des Kennzeichnungselementes am Dämmmaterial. Hierzu sind durchgehende Bänder vorgesehen, die auf einem Teil eine Kennzeichnung tragen, während beispielsweise der andere Teil mit dem Trägermaterial und/oder der Mineralfasermatte verbunden ist. Dadurch, dass das Kennzeichnungselement in Teilbereichen unterhalb und in anderen Teilbereichen oberhalb des Trägermaterials angeordnet ist, wird einerseits eine gute Befestigung des Kennzeichnungselementes und andererseits eine gute Erkennbarkeit der Informationen auf dem Kennzeichnungselement erzielt.

Nach einem weiteren Merkmal der Erfindung ist vorgesehen, dass das Kennzeichnungselement als sich über die Länge der Fasermatte erstreckendes Band ausgebildet ist, dass auf zumindest einem Teilabschnitt die Informationen trägt, während der bzw. die verbleibenden Teilabschnitte mit dem Trägermaterial verbunden ist bzw. sind.

Vorzugsweise ist das Kennzeichnungselement mit der Fasermatte versteppt. Es ist aber auch denkbar, dass das Kennzeichnungselement in anderer Weise mit der Fasermatte und/oder dem Trägermaterial verbunden ist. Als bevorzugtes Material für das Kennzeichnungselement haben sich Metallfolien, Metallgewebe, Metallgeflechte, hitzebeständige Kunststoffe und/oder textile Gewebe erwiesen.

Weiterhin ist vorgesehen, dass die Informationen in das Kennzeichnungselement eingeprägt, perforiert, eingefräst, eingeritzt und/oder durch Ausstanzungen eingebracht sind. Hierbei handelt es sich um mechanische Materialbearbeitungen, die auch dann erkennbar bleiben, wenn das Kennzeichnungselement äußeren Temperatur- und/oder mechanischen Einwirkungen ausgesetzt ist. Alternativ kann vorgesehen sein, dass die Information in das als Metallgewebe oder Metallgelecht ausgebildete Kennzeichnungselement eingewebt ist. Auch diese Vorgehensweise stellt sicher, dass die Information dauerhaft ist.

Nach einem weiteren Merkmal der Erfindung ist vorgesehen, dass das Kennzeichnungselement im Bereich zumindest einer Längskante in gleichmäßigen Abständen angeordnete Einschnitte aufweist. Durch diese Einschnitte werden durch das Versteppen auftretende Deformationen des Kennzeichnungsbandes vermindert bzw. verhindert.

Die Befestigung des Kennzeichnungselementes am Trägermaterial, welches als Metallgewebe ausgebildet ist, erfolgt vorzugsweise durch Verschweißen. Ein derartiger Schweißvorgang kann kontinuierlich dadurch durchgeführt werden, dass das Kennzeichnungselement punktuell und in gleichmäßigen Abständen mit dem Trägermaterial verschweißt wird.

Nach einer alternativen Ausgestaltung des erfindungsgemäßen Dämmmaterials ist vorgesehen, dass das Kennzeichnungselement aus zwei miteinander verbindbaren Bändern, nämlich einem Kennzeichnungsband und einem Gegenband besteht, wobei das Gegenband zwischen dem Trägermaterial und der Fasermatte angeordnet ist, während das Kennzeichnungsband auf dem Trägermaterial angeordnet ist. Das Gegenband und das Kennzeichnungsband sind miteinander verbindbar, wobei die Verbindung insbesondere durch eine Verklebung, durch Vernähen, durch Verklammern, durch Vernieten und/oder durch Verschweißen erfolgt. Diese Ausgestaltung führt zu einer wesentlich verbesserten Lesbarkeit der Kennzeichnung, da das Kennzeichnungsband auf dem Trägermaterial aufgebracht ist. Das Kennzeichnungsband wird mit Hilfe beispielsweise eines hitzebeständigen Klebers oder Kits mit dem unterhalb des Trägermaterials vorgesehenen Gegenband verklebt. Bei den Dämmmaterialien, deren thermische Belastung gering ist, genügt als Verbindungsschicht auch ein thermoplastischer Kunststoff. Beispielsweise können als mit Polyäthylen beschichtete Kennzeichnungsbänder aus Aluminium mit einem ebenfalls mit Polyäthylen beschichteten Aluminiumband oder einem Glasfaservlies oder-gewebe verschweißt werden. Wesentlich thermostabiler sind darüber hinaus Schweißverbindungen von Metallen. Beispielsweise kann das Kennzeichnungsband mit Hilfe von Punktschweißungen mit dem Gegenband verbunden werden. Die Ansteuerung des Schweißgerätes erfolgt vorzgusweise über ein mitlaufendes Rad, das in die Maschen des Trägermaterials eingreift und ein entsprechendes Signal an die Schweißmaschine abgibt. Beispielsweise kann die Verschweißung auch durch ein punktweises Aufschmelzen der Metallbänder mit Hilfe eines Lasers erfolgen.

Es ist nach einem weiteren Merkmal der Erfindung vorgesehen, dass die Längskanten des Kennzeichnungsbandes abgerundet und/oder umgebördelt sind. Diese Ausgestaltung hat den Vorteil, dass die Verletzungsgefahr der die Mineralfasermatte handhabenden Person wesentlich verringert wird, da beispielsweise Schnittverletzungen durch scharfkantige Ränder vermieden werden. Insbesondere wenn die Befestigungspunkte des Kennzeichnungselementes am Trägermaterial und/oder der Fasermatte in solchen Abständen angeordnet sind, dass zwischen den Befestigungspunkten ein Abschnitt des Kennzeichnungselementes angeordnet ist, der als Traggriff verwendet werden kann, ist es sinnvoll, eine entsprechende Abrundung oder Umbördelung der Längskanten des Kennzeichnungsbandes durchzuführen.

Weitere Merkmale und Vorteile der Erfindung ergeben sich aus der nachfolgenden Beschreibung der zugehörigen Zeichnung, in der bevorzugte Ausführungsformen des erfindungsgemäßen Dämmmaterials dargestellt sind. In der Zeichnung zeigen:
- Figur 1: eine erste Ausführungsform eines Kennzeichnungselementes für die Anordnung auf einem Dämmmaterial, bestehend aus einer Fasermatte und einem Trägermaterial;
- Figur 2: eine zweite Ausführungsform eines Kennzeichnungselementes auf einem Trägermaterial in Draufsicht und
- Figur 3: das Kennzeichnungselemente gemäß Figur 2 in Seitenansicht.

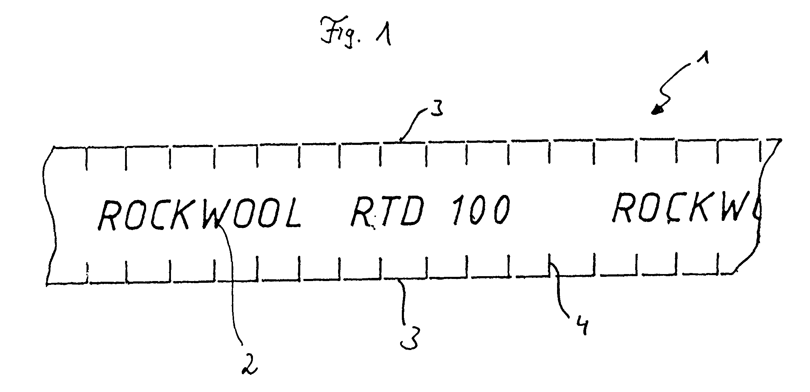

Figur 1 zeigt ein als Band ausgebildetes Kennzeichnungselement 1, auf dessen einer Oberfläche Markierungen 2 in Form von Buchstaben und Zahlen angeordnet sind. Das Kennzeichnungselement 1 weist zwei parallel zueinander verlaufende Längskanten 3 auf, die in gleichmäßigen Abschnitten angeordnete Einschnitte 4 haben. Die Einschnitte 4 verlaufen rechtwinklig zu den Längskanten 3 und haben eine Länge von ca. zwischen 10 und 20% der Gesamtbreite des Kennzeichnungselementes 1.

Das in Figur 1 dargestellte Kennzeichnungselement 1 dient einer Anordnung zwischen einer nicht näher dargestellten Fasermatte und einem Trägermaterial, wobei das Kennzeichnungselement 1 teilweise unterhalb und teilweise oberhalb des Trägermaterials angeordnet ist. Das Kennzeichnungselement 1 ist sowohl mit dem Trägermaterial, als auch mit der Fasermatte verbunden.

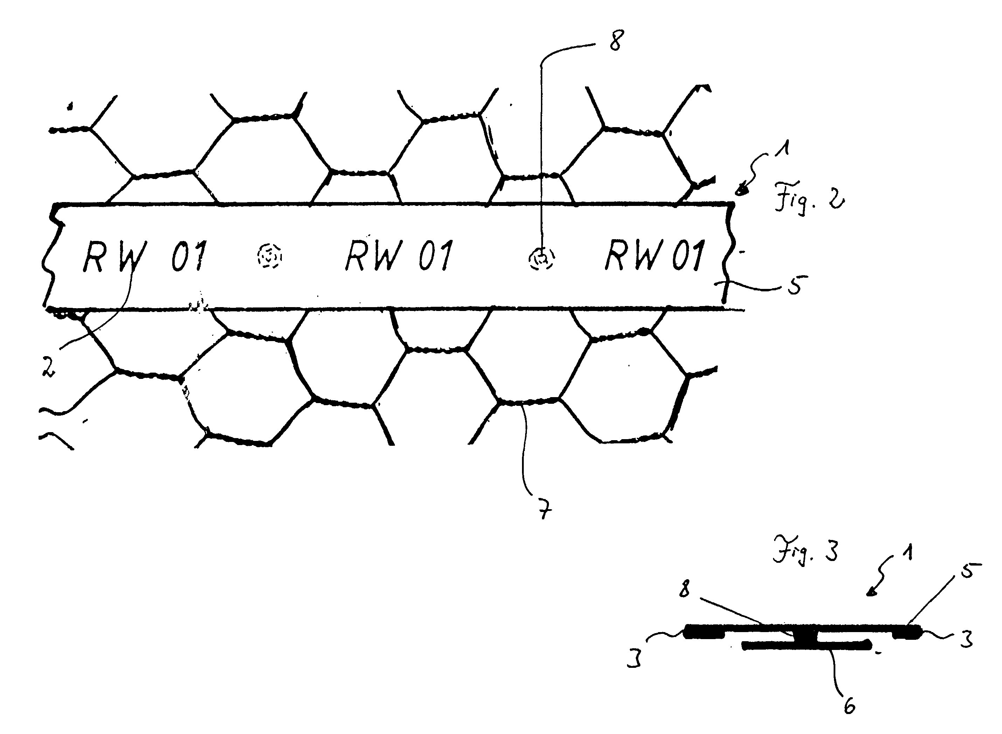

Eine zweite Ausführungsform eines Kennzeichnungselementes 1 ist in den Figuren 2 und 3 dargestellt. Bei dieser Ausführungsform weist das Kennzeichnungselement 1 ein Kennzeichnungsband 5 und ein Gegenband 6 auf. Das Kennzeichnungsband 5 trägt die Markierungen 2 in Form von Buchstaben und Zahlen und liegt vollflächig auf dem Trägermaterial 7 auf, welches in Form eines Metalldrahtgeflechtes ausgebildet ist.

Das Gegenband 6 liegt demgegenüber unterhalb des Trägermaterials 7 auf der nicht näher dargestellten Fasermatte auf. Hierbei weist das Gegenband 6 eine Breite auf, die größer als die Maschenweite des Trägermaterials 7 ist.

Kennzeichnungsband 5 und Gegenband 6 sind im Bereich von Verbindungsstellen 8 miteinander verbunden, wobei die Verbindungsstellen 8 in gleichmäßigen Abständen entlang der Längsrichtung des Kennzeichnungselementes 1 angeordnet sind.

Die Verbindungsstellen 8 können beispielsweise Klebepunkte oder Schweißpunkte sein, soweit das Kennzeichnungsband 5 und das Gegenband 6 aus einem schweißbaren Material bestehen.

Gemäß Figur 3 sind die im Randbereich entlang der Längskanten 3 des Kennzeichnungsbandes 5 umgebördelt, so dass sich hier eine abgerundete Längskante 3 ausbildet, durch die mögliche Verletzungen, insbesondere Schnittverletzungen vermieden werden, wenn das Kennzeichnungselement 1 entsprechend einer weiteren Bestimmung als Traggriff verwendet wird.

## Patentansprüche

1. Dämmmaterial bestehend aus einer Fasermatte, insbesondere aus Mineralfasem, vorzugsweise aus Steinwolle, einem streifenförmig ausgebildeten Kennzeichnungselement (1), das auf der großen Oberfläche der Fasermatte derart angeordnet ist, dass auf dem Kennzeichnungselement (1) angeordnete Informationen erkennbar sind und einem auf mindestens einer großen Oberfläche der Fasermatte angeordnetem Trägermaterial (7),
**dadurch gekennzeichnet,**
**dass** das Kennzeichnungselement (1) in Teilbereichen unterhalb und in anderen Teilbereichen oberhalb des Trägermaterials (7) angeordnet und zumindest mit dem Trägermaterial (7) verbunden ist.

2. Dämmmaterial nach Anspruch 1,
**dadurch gekennzeichnet,**
**dass** das Kennzeichnungselement (1) als sich über die Länge der Fasermatte erstreckendes Band ausgebildet ist, das auf zumindest einem Teilabschnitt die Informationen trägt, während der bzw. die verbleibenden Teilabschnitte mit dem Trägermaterial (7) verbunden ist bzw. sind.

3. Dämmmaterial nach Anspruch 1,
**dadurch gekennzeichnet,**
**dass** das Kennzeichnungselement (1) mit der Fasermatte versteppt ist.

4. Dämmmaterial nach Anspruch 1,
**dadurch gekennzeichnet,**
**dass** das Kennzeichnungselement (1) aus Metallfolie, Metallgewebe, Metallgeflecht, hitzebeständigem Kunststoff und/oder textilem Gewebe besteht.

5. Dämmmaterial nach Anspruch 1,
**dadurch gekennzeichnet,**
**dass** die Informationen (2) in das Kennzeichnungselement eingeprägt, perforiert, eingefräst, eingeritzt und/oder durch Ausstanzungen eingebracht sind.

6. Dämmmaterial nach Anspruch 4,
**dadurch gekennzeichnet,**
**dass** die Informationen (2) in das als Metallgewebe oder Metallgeflecht ausgebildete Kennzeichnungselement (1) eingewebt sind.

7. Dämmmaterial nach Anspruch 1,
**dadurch gekennzeichnet,**
**dass** das Kennzeichnungselement (1) im Bereich zumindest einer seiner Längskanten (3) in gleichmäßigen Abständen angeordnete Einschnitte (4) aufweist.

8. Dämmmaterial nach Anspruch 1,
**dadurch gekennzeichnet,**
**dass** das Trägermaterial (7) als Metallgewebe ausgebildet und das Kennzeichnungselement (1) mit dem Trägermaterial (7) verschweißt ist.

9. Dämmmaterial nach Anspruch 1,
**dadurch gekennzeichnet,**
**dass** das Kennzeichnungselement (1) aus zwei miteinander verbindbaren Bändern, nämlich einem Kennzeichnungsband (5) und einem Gegenband (6) besteht, wobei das Gegenband (6) zwischen dem Trägermaterial (7) und der Fasermatte angeordnet ist, während das Kennzeichnungsband (5) auf dem Trägermaterial (7) angeordnet ist.

10. Dämmmaterial nach Anspruch 9,
**dadurch gekennzeichnet,**
**dass** Gegenband (6) und Kennzeichnungsband (5) miteinander verbindbar, insbesondere verklebbar, vernähbar, verklammerbar, vernietbar und/oder verschweißbar sind.

11. Dämmmaterial nach Anspruch 9,
**dadurch gekennzeichnet,**
**dass** Gegenband (6) und Kennzeichnungsband (5) aus Metall, insbesondere aus Aluminium bestehen und die Verbindung durch punktweises Aufschmelzen mit Hilfe eines Lasers ausgeführt ist.

12. Dämmmaterial nach Anspruch 9,
**dadurch gekennzeichnet,**
**dass** die Längskanten (3) des Kennzeichnungsbandes (5) abgerundet und/oder umgebördelt sind.

13. Dämmmaterial nach Anspruch 1,
**dadurch gekennzeichnet,**
**dass** die Abstände zwischen den Befestigungspunkten (8) des Kennzeichnungselementes (1) am Trägermaterial (7) und/oder der Fasermatte zumindest teilweise derart ausgebildet sind, dass das Kennzeichnungselement (1) ergänzend als Traggriff dient.

## Claims

1. Insulating material consisting of a fiber mat, particularly of mineral fibers, preferably of rockwool, a strip-like identification element (1) which is disposed on the large surface of said fiber mat in such a way that information is provided on said identification element (1) is recognizable, and a supporting material (7) that is arranged on at least one large surface of said fiber mat,
**characterized in**
**that** said identification element (1) is arranged in partial areas below and in other partial areas above said supporting material (7) and is connected to at least said supporting material (7).

2. Insulating material according to claim 1,
**characterized in**
**that** said identification element (1) is formed as a band which extends over the length of the fiber mat and which carries at least in a partial portion said information, while the remaining partial portion or portions is or are connected to said supporting material (7).

3. Insulating material according to claim 1,
**characterized in**
**that** said idenfication element (1) is quilted to said fiber mat.

4. Insulating material according to claim 1,
**characterized in**
**that** said identification element (1) consists of metal foil, metallic tissue, metal plaiting, heat-resistant plastic material and/or woven glass fabric.

5. Insulating material according to claim 1,
**characterized in**
**that** said information (2) is worked in by engraving, perforating, milling, scratching and/or punchings.

6. Insulating material according to claim 4,
**characterized in**
**that** said information (2) is woven into said identification element (1) which is formed as a metallic tissue or metal plaiting.

7. Insulating material according to claim 1,
**characterized in**
**that** said identification element (1) includes incisions (4) arranged at equal intervals in the region of at least one of its longitudinal edges (3).

8. Insulating material according to claim 1,
**characterized in**
**that** said supporting material (7) is formed as a metallic tissue and said identification element (1) is quilted to the supporting material (7).

9. Insulating material according to claim 1,
**characterized in**
**that** said identification element (1) consists of two bands which can be connected to each other, namely an identification band (5) and a counter band (6), which counter band (6) is arranged between said supporting material (7) and said fiber mat, while said identification band (5) is arranged on said supporting material (7).

10. Insulating material according to claim 9,
**characterized in**
**that** said counter band (6) and said identification band (5) can be connected and particularly glued, sewn, clamped, riveted and/or welded to each other.

11. Insulating material according to claim 9,
**characterized in**
**that** said counter band (6) and identification band (5) consist of metal, particularly aluminium, and said connection is made by melting in a point-by-point fashion.

12. Insulating material according to daim 9,
**characterized in**
**that** the longitudinal edges (3) of said identification band (5) are rounded and/or beaded.

13. Insulating material according to claim 1,
**characterized in**
**that** the distances between the fixing points (8) of said identification element (1) on the supporting material (7) and/or the fiber mat are at least partly formed in such a manner that said identification element (1) additionally serves as a carrying handle.

## Revendications

1. Matériau d'isolation constitué par une natte de fibres, en particulier en fibres minérales, de préférence en laine de roche, par un élément d'identification (1) configuré en forme de bande, qui est placé sur la grande surface de la natte de fibres de telle manière que des informations placées sur l'élément d'identification (1) peuvent être reconnues et par un matériau de support (7) placé sur au moins une grande surface de la natte de fibres,
**caractérisé en ce**
**que** l'élément d'identification (1) est placé dans des zones partielles au-dessous et dans d'autres zones partielles au-dessus du matériau de support (7) et est relié au moins au matériau de support (7).

2. Matériau d'isolation selon la revendication 1,
**caractérisé en ce**
**que** l'élément d'identification (1) est configuré comme bande s'étendant sur la longueur de la natte de fibres qui porte les informations sur au moins une section partielle, tandis que l'autre ou les autres sections partielles qui restent est ou sont reliées au matériau de support (7).

3. Matériau d'isolation selon la revendication 1,
**caractérisé en ce**
**que** l'élément d'identification (1) est piqué avec la natte de fibres.

4. Matériau d'isolation selon la revendication 1,
**caractérisé en ce**
**que** l'élément d'identification (1) est constitué par de la feuille métallique, du tissu métallique, du treillis métallique, du plastique résistant à la chaleur et/ou du tissu textile.

5. Matériau d'isolation selon la revendication 1,
**caractérisé en ce**
**que** les informations (2) sont gravées, perforées, fraisées, rayées et/ou incrustées par des poinçonneages.

6. Matériau d'isolation selon la revendication 4,
**caractérisé en ce**
**que** les informations (2) sont tissées dans l'élément d'identification (1) configuré comme un tissu métallique ou un treillis métallique.

7. Matériau d'isolation selon la revendication 1,
**caractérisé en ce**
**que** l'élément d'identification (1) présente, dans la zone d'au moins l'une de ses arêtes longitudinales (3), des incisions (4) placées à des intervalles réguliers.

8. Matériau d'isolation selon la revendication 1,
**caractérisé en ce**
**que** le matériau de support (7) est configuré comme un tissu métallique et l'élément d'identification (1) est soudé au matériau de support (7).

9. Matériau d'isolation selon la revendication 1,
**caractérisé en ce**
**que** l'élément d'identification (1) est constitué par deux bandes pouvant être reliées l'une à l'autre, à savoir une bande d'identification (5) et une bande antagoniste (6), la bande antagoniste (6) étant placée entre le matériau de support (7) et la natte de fibres, tandis que la bande d'identification (5) est placée sur le matériau de support (7).

10. Matériau d'isolation selon la revendication 9,
**caractérisé en ce**
**que** la bande antagoniste (6) et la bande d'identification (5) peuvent être reliées l'une à l'autre, en particulier peuvent être collées, cousues, agrafées, rivetées et/ou soudues.

11. Matériau d'isolation selon la revendication 9,
**caractérisé en ce**
**que** la bande antagoniste (6) et la bande d'identification (5) sont constituées par du métal, en particulier par de l'aluminium, et que la jonction est réalisée par fusion ponctuelle à l'aide d'un laser.

12. Matériau d'isolation selon la revendication 9,
**caractérisé en ce**
**que** les arêtes longitudinales (3) de la bande d'identification (5) sont arrondies et/ou bordées.

13. Matériau d'isolation selon la revendication 1,
**caractérisé en ce**
**que** les espaces entre les points de fixation (8) de l'élément d'identification (1 ) sur le matériau de support et/ou de la fibre en nattes sont configurés au moins partiellement de telle manière que l'élément d'identification (1) sert en complément comme poignée.
